# EUROPEAN PATENT APPLICATION

(11) **EP 4 379 855 A1**
(43) Date of publication of application: **05.06.2024**
(21) Application number: 22849284.9
(22) Date of filing: 14.07.2022
(51) Int. Cl.: H01M 4/139, H01M 4/1393, H01M 4/1395, H01M 4/1397, H01M 4/38, H01M 4/62

(54) **CONDUCTIVE MATERIAL PASTE FOR NON-AQUEOUS ELECTROLYTE SECONDARY BATTERY, SLURRY COMPOSITION FOR NEGATIVE ELECTRODE OF NON-AQUEOUS ELECTROLYTE SECONDARY BATTERY, NEGATIVE ELECTRODE FOR NON-AQUEOUS ELECTROLYTE SECONDARY BATTERY, AND NON-AQUEOUS ELECTROLYTE SECONDARY BATTERY**

(30) Priority: 30.07.2021 JP 2021126166
(71) Applicant: Zeon Corporation, Tokyo 100-8246 (JP)
(72) Inventor: OSHIMA, Hiroki, Tokyo 100-8246 (JP)
(74) Representative: Maiwald GmbH
(86) International application number: PCT/JP2022/027765
(87) International publication number: WO 2023/008221

(57) **Abstract**

Provided is a conductive material paste for a non-aqueous electrolyte solution secondary battery that maintains paste dispersibility and that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test. The conductive material paste for a non-aqueous electrolyte solution secondary battery contains carbon nanotubes (A), a dispersant (B), a dispersant (C), and water. The dispersant (B) is a copolymer including at least an unsaturated carboxylic acid monomer unit and a (meth)acrylamide group-containing monomer unit. The dispersant (C) is a thiazoline or derivative thereof.

## Description

### TECHNICAL FIELD

The present disclosure relates to a conductive material paste for a non-aqueous electrolyte solution secondary battery, a slurry composition for a non-aqueous electrolyte solution secondary battery negative electrode, a negative electrode for a non-aqueous electrolyte solution secondary battery, and a non-aqueous electrolyte solution secondary battery.

### BACKGROUND

Non-aqueous electrolyte solution secondary batteries such as lithium ion secondary batteries have characteristics such as compact size, light weight, high energy-density, and the ability to be repeatedly charged and discharged, and are used in a wide range of applications. An electrode for a non-aqueous electrolyte solution secondary battery may, for example, include a current collector and an electrode mixed material layer formed by drying a slurry composition for a non-aqueous electrolyte solution secondary battery electrode on the current collector.

In recent years, fibrous conductive carbons such as carbon nanotubes (hereinafter, also abbreviated as "CNTs") have been used as conductive materials in the formation of electrode mixed material layers. In regards to the formation of an electrode mixed material layer using a fibrous conductive carbon, a technique of premixing the fibrous conductive carbon and a dispersant to obtain a conductive material paste for a non-aqueous electrolyte solution secondary battery electrode and then combining the obtained conductive material paste with an electrode active material to produce a slurry composition for a non-aqueous electrolyte solution secondary battery electrode has been proposed with the aim of obtaining an electrode mixed material layer in which the fibrous conductive carbon is dispersed well (for example, refer to Patent Literature (PTL) 1 and 2).

### CITATION LIST

### Patent Literature

PTL 1: WO2020/196115A1
PTL 2: WO2020/208880A1

### SUMMARY

### (Technical Problem)

However, there is room for further improvement in the conventional technique described above in terms of suppressing the rate of resistance increase of a non-aqueous electrolyte solution secondary battery in a high-temperature storage test. Specifically, there is demand for the provision of a conductive material paste for a non-aqueous electrolyte solution secondary battery that maintains paste dispersibility and that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Accordingly, one object of the present disclosure is to provide a conductive material paste for a non-aqueous electrolyte solution secondary battery that maintains paste dispersibility and that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Another object of the present disclosure is to provide a slurry composition for a non-aqueous electrolyte solution secondary battery negative electrode that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Another object of the present disclosure is to provide a negative electrode for a non-aqueous electrolyte solution secondary battery that is capable of providing a non-aqueous electrolyte solution secondary battery having a suppressed rate of resistance increase in a high-temperature storage test.

Another object of the present disclosure is to provide a non-aqueous electrolyte solution secondary battery having a suppressed rate of resistance increase in a high-temperature storage test.

### (Solution to Problem)

The inventor conducted diligent investigation with the aim of solving the problem set forth above. The inventor discovered that by using a conductive material paste for a non-aqueous electrolyte solution secondary battery that contains: carbon nanotubes; a dispersant that is a copolymer including an unsaturated carboxylic acid monomer unit and a (meth)acrylamide group-containing monomer unit; a dispersant that is a thiazoline-based compound; and water as a dispersion medium, it is possible to maintain paste dispersibility and enable the provision of a slurry composition for a non-aqueous electrolyte solution secondary battery negative electrode in which slurry viscosity stability is maintained while also providing a non-aqueous electrolyte solution secondary battery having a suppressed rate of resistance increase in a high-temperature storage test. In this manner, the inventor completed the present disclosure.

Specifically, the present disclosure aims to advantageously solve the problem set forth above, and a presently disclosed conductive material paste for a non-aqueous electrolyte solution secondary battery comprises carbon nanotubes (A), a dispersant (B), a dispersant (C), and water, wherein the dispersant (B) is a copolymer including at least an unsaturated carboxylic acid monomer unit and a (meth)acrylamide group-containing monomer unit, and the dispersant (C) is a thiazoline or derivative thereof. By using a conductive material paste for a non-aqueous electrolyte solution secondary battery that contains the carbon nanotubes (A), the dispersant (B), and the dispersant (C) in this manner, it is possible to maintain paste dispersibility of the paste while also providing a slurry composition for a non-aqueous electrolyte solution secondary battery negative electrode in which slurry viscosity stability is maintained, a negative electrode for a non-aqueous electrolyte solution secondary battery that is capable of providing a non-aqueous electrolyte solution secondary battery having a suppressed rate of resistance increase in a high-temperature storage test, and a non-aqueous electrolyte solution secondary battery that has a suppressed rate of resistance increase in a high-temperature storage test.

The copolymer constituting the dispersant (B) preferably further includes an aromatic sulfonic acid monomer unit.

Moreover, content of the unsaturated carboxylic acid monomer unit is preferably not less than 5 parts by mass and not more than 80 parts by mass when all monomer units are taken to be 100 parts by mass in the copolymer constituting the dispersant (B).

Furthermore, content of the (meth)acrylamide group-containing monomer unit is preferably not less than 25 parts by mass and not more than 400 parts by mass when content of the unsaturated carboxylic acid monomer unit is taken to be 100 parts by mass in the copolymer constituting the dispersant (B).

Also, at least a portion of the unsaturated carboxylic acid monomer unit included in the copolymer constituting the dispersant (B) is preferably in a form of a neutralized salt that is an alkali metal salt or an ammonium salt.

Moreover, the thiazoline or derivative thereof constituting the dispersant (C) is preferably an isothiazoline or derivative thereof.

Furthermore, the presently disclosed conductive material paste for a non-aqueous electrolyte solution secondary battery preferably further comprises carbon black.

Also, it is preferable that the conductive material paste further comprises a particulate polymer, wherein the particulate polymer includes at least an unsaturated carboxylic acid monomer unit, an aromatic vinyl monomer unit, and a diene monomer unit as polymer constitutional units.

Moreover, the conductive material paste preferably has a pH of not lower than 6 and not higher than 9.

Furthermore, a presently disclosed slurry composition for a non-aqueous electrolyte solution secondary battery negative electrode comprises: the conductive material paste for a non-aqueous electrolyte solution secondary battery; and at least a silicon-based active material.

Also, a presently disclosed negative electrode for a non-aqueous electrolyte solution secondary battery comprises a negative electrode mixed material layer formed using the slurry composition set forth above.

Moreover, a presently disclosed non-aqueous electrolyte solution secondary battery comprises the negative electrode set forth above.

### (Advantageous Effect)

According to the present disclosure, it is possible to provide a conductive material paste for a non-aqueous electrolyte solution secondary battery that maintains paste dispersibility and that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Moreover, according to the present disclosure, it is possible to provide a slurry composition for a non-aqueous electrolyte solution secondary battery negative electrode that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Furthermore, according to the present disclosure, it is possible to provide a negative electrode for a non-aqueous electrolyte solution secondary battery that is capable of providing a non-aqueous electrolyte solution secondary battery having a suppressed rate of resistance increase in a high-temperature storage test.

Also, according to the present disclosure, it is possible to provide a non-aqueous electrolyte solution secondary battery having a suppressed rate of resistance increase in a high-temperature storage test.

### DETAILED DESCRIPTION

The following provides a detailed description of embodiments of the present disclosure.

The presently disclosed conductive material paste for a non-aqueous electrolyte solution secondary battery may be used as a material in production of a slurry composition for a non-aqueous electrolyte solution secondary battery negative electrode. Moreover, the presently disclosed negative electrode for a non-aqueous electrolyte solution secondary battery includes a negative electrode mixed material layer that is formed using the presently disclosed slurry composition for a non-aqueous electrolyte solution secondary battery negative electrode. Furthermore, the presently disclosed non-aqueous electrolyte solution secondary battery includes the presently disclosed negative electrode for a non-aqueous electrolyte solution secondary battery.

### (Conductive material paste for non-aqueous electrolyte solution secondary battery)

The presently disclosed conductive material paste for a non-aqueous electrolyte solution secondary battery (hereinafter, also referred to simply as a "conductive material paste") is a composition having carbon nanotubes (A), a dispersant (B), and a dispersant (C) dispersed and/or dissolved in water serving as a dispersion medium. The dispersant (B) is a copolymer that includes at least an unsaturated carboxylic acid monomer unit and a (meth)acrylamide group-containing monomer unit. Moreover, the dispersant (C) is a thiazoline or derivative thereof. By using such a conductive material paste, it is possible to maintain paste dispersibility of the paste and enable the provision of a slurry composition for a non-aqueous electrolyte solution secondary battery negative electrode in which slurry viscosity stability is maintained while also producing a slurry composition for a non-aqueous electrolyte solution secondary battery negative electrode that is capable of providing a non-aqueous electrolyte solution secondary battery having a suppressed rate of resistance increase in a high-temperature storage test, a negative electrode for a non-aqueous electrolyte solution secondary battery that is capable of providing a non-aqueous electrolyte solution secondary battery having a suppressed rate of resistance increase in a high-temperature storage test, and a non-aqueous electrolyte solution secondary battery that has a suppressed rate of resistance increase in a high-temperature storage test.

### <Carbon nanotubes (A)>

The carbon nanotubes (A) are not specifically limited so long as they are carbon nanotubes (CNTs) with which the object of the present disclosure can be achieved. The carbon nanotubes may, depending on the type of wall format, be single-walled (SW) carbon nanotubes and/or multi-walled (MW) carbon nanotubes. Although the carbon nanotubes (A) may be single-walled carbon nanotubes, multi-walled carbon nanotubes, or a combination thereof, single-walled carbon nanotubes are preferable from a viewpoint that electrical conduction paths can be formed over longer distances in a negative electrode mixed material layer.

The average diameter of the CNTs may be preferably 0.5 nm or more, more preferably 1 nm or more, and even more preferably 2 nm or more, and may be preferably 50 nm or less, more preferably 40 nm or less, and even more preferably 20 nm or less.

The average length of the CNTs may be preferably 1 µm or more, more preferably 3 µm or more, and even more preferably 5 µm or more, and may be preferably 40 µm or less, more preferably 30 µm or less, and even more preferably 20 µm or less.

When the average diameter and the average length are not less than any of the lower limits set forth above, aggregation of the CNTs can be sufficiently inhibited, and sufficient dispersibility of the CNTs as a conductive material can be ensured. Moreover, when the average diameter and the average length are not more than any of the upper limits set forth above, good electrical conduction path formation in an electrode mixed material layer can be achieved, and secondary battery output characteristics can be further improved.

Note that the "average diameter" and "average length" can be determined by measuring the diameters (external diameters) and lengths of 100 randomly selected CNTs using a TEM.

The aspect ratio (length/diameter) of the CNTs is normally more than 5, and preferably 10 or more. Note that the "aspect ratio" of CNTs referred to in the present disclosure can be determined by measuring the major axis and the minor axis of each of 100 randomly selected CNTs using a transmission electron microscope.

### <<Production method of carbon nanotubes>>

Examples of methods by which CNTs having the properties described above can be produced include known methods such as an arc discharge method, a laser ablation method, and a super growth method without any specific limitations.

### «Proportional content of carbon nanotubes (A)»

The proportional content of the carbon nanotubes (A) relative to all solid content of the conductive material paste may be 20 mass% or more, preferably 30 mass% or more, and more preferably 40 mass% or more, for example. Moreover, this proportional content may be 90 mass% or less, preferably 85 mass% or less, and more preferably 80 mass% or less, for example. When the proportional content of the carbon nanotubes (A) is not less than any of the lower limits set forth above, electrical contact between the carbon nanotubes (A) in an electrode mixed material layer can be even better ensured, internal resistance of an obtained secondary battery can be reduced, and the secondary battery can be caused to display even better output characteristics. Moreover, the capacity of the secondary battery can be more stably preserved. On the other hand, when the proportional content of the carbon nanotubes (A) is not more than any of the upper limits set forth above, the proportional content of the dispersant (B) can be increased, and an effect of improving paste dispersibility of an obtained conductive material paste and slurry viscosity stability of an obtained slurry composition through the dispersant (B) can be enhanced.

### <Dispersant (B)>

The dispersant (B) is a water-soluble copolymer that includes at least an unsaturated carboxylic acid monomer unit and a (meth)acrylamide group-containing monomer unit. The copolymer constituting the dispersant (B) preferably further includes an aromatic sulfonic acid monomer unit from a viewpoint of further improving carbon nanotube dispersibility.

The term "water-soluble polymer" as used in the present disclosure refers to a polymer for which insoluble content is less than 1.0 mass% when 0.5 g of the polymer is dissolved in 100 g of water at a temperature of 25°C.

Moreover, when a polymer is said to "include a monomer unit", this means that "a polymer obtained using that monomer includes a repeating unit derived from the monomer".

Furthermore, the proportional content of a monomer unit in a polymer referred to in the present disclosure can be measured by a nuclear magnetic resonance (NMR) method such as ¹H-NMR or ¹³C-NMR.

### <<Unsaturated carboxylic acid monomer unit>>

The unsaturated carboxylic acid monomer unit that is a constituent of the copolymer constituting the dispersant (B) may be an ethylenically unsaturated carboxylic acid monomer unit. An ethylenically unsaturated carboxylic acid monomer that can form the ethylenically unsaturated carboxylic acid monomer unit normally does not include a hydroxyl group (-OH) other than a hydroxyl group in a carboxyl group.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. One ethylenically unsaturated carboxylic acid monomer may be used individually, or two or more ethylenically unsaturated carboxylic acid monomers may be used in combination in a freely selected ratio.

Examples of ethylenically unsaturated monocarboxylic acids that may be used include acrylic acid, methacrylic acid, and crotonic acid.

Examples of derivatives of ethylenically unsaturated monocarboxylic acids that may be used include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids that may be used include maleic acid, fumaric acid, and itaconic acid.

Examples of acid anhydrides of ethylenically unsaturated dicarboxylic acids that may be used include maleic anhydride, diacrylic anhydride, methylmaleic anhydride, and dimethylmaleic anhydride.

Examples of derivatives of ethylenically unsaturated dicarboxylic acids that may be used include methylmaleic acid, phenylmaleic acid, chloromaleic acid, dichloromaleic acid, and fluoromaleic acid.

It is preferable to use a monofunctional ethylenically unsaturated carboxylic acid monomer that includes one ethylenically unsaturated bond (C=C) in a molecule as an ethylenically unsaturated carboxylic acid monomer. Moreover, from a viewpoint of polymerizability, ethylenically unsaturated monocarboxylic acids and ethylenically unsaturated dicarboxylic acids are preferable, acrylic acid, methacrylic acid, and itaconic acid are more preferable, and acrylic acid and methacrylic acid are even more preferable as ethylenically unsaturated monocarboxylic acids. Furthermore, from a viewpoint of inhibiting excessive swelling of the obtained copolymer in electrolyte solution, acrylic acid is further preferable as an ethylenically unsaturated carboxylic acid monomer.

For at least a portion of the unsaturated carboxylic acid monomer unit, a carboxyl group part may be in the form of a neutralized salt that is an alkali metal salt or an ammonium salt. The alkali metal salt may be a lithium salt, a sodium salt, a potassium salt, a rubidium salt, or a cesium salt, for example, and is preferably a lithium salt.

When all monomer units are taken to be 100 parts by mass in the copolymer constituting the dispersant (B), the content of the unsaturated carboxylic acid monomer unit is preferably 15 parts by mass or more, more preferably 20 parts by mass or more, and even more preferably 25 parts by mass or more, and is preferably 80 parts by mass or less, more preferably 70 parts by mass or less, and even more preferably 60 parts by mass or less. When the proportional content of the unsaturated carboxylic acid monomer unit in the copolymer constituting the dispersant (B) is not less than any of the lower limits set forth above, paste dispersibility of an obtained conductive material paste can be improved. On the other hand, when the proportional content of the unsaturated carboxylic acid monomer unit in the copolymer constituting the dispersant (B) is not more than any of the upper limits set forth above, suppression of the rate of resistance increase of an obtained non-aqueous electrolyte solution secondary battery in a high-temperature storage test can be improved.

### «(Meth)acrylamide group-containing monomer unit»

(Meth)acrylamide monomers that can form the (meth)acrylamide group-containing monomer unit are acrylamide, methacrylamide, and combinations thereof.

When all monomer units are taken to be 100 parts by mass in the copolymer constituting the dispersant (B), the content of the (meth)acrylamide group-containing monomer unit is preferably 15 parts by mass or more, more preferably 20 parts by mass or more, and even more preferably 25 parts by mass or more, and is preferably 50 parts by mass or less, more preferably 60 parts by mass or less, and even more preferably 85 parts by mass or less.

When the content of the unsaturated carboxylic acid monomer unit is taken to be 100 parts by mass in the copolymer constituting the dispersant (B), the content of the (meth)acrylamide group-containing monomer unit is preferably 25 parts by mass or more, more preferably 30 parts by mass or more, and even more preferably 35 parts by mass or more, and is preferably 400 parts by mass or less, more preferably 300 parts by mass or less, and even more preferably 200 parts by mass or less.

When the proportional content of the (meth)acrylamide group-containing monomer unit is not less than any of the lower limits set forth above, cycle characteristics of an obtained non-aqueous electrolyte solution secondary battery can be improved. On the other hand, when the proportional content of the (meth)acrylamide monomer unit is not more than any of the upper limits set forth above, viscosity stability of an obtained slurry composition can be improved.

### <<Aromatic sulfonic acid monomer unit>>

An "aromatic sulfonic acid monomer" that can form the aromatic sulfonic acid monomer unit is a compound that includes an aromatic ring, an ethylenically unsaturated bond, and a sulfo group. The aromatic sulfonic acid monomer may be styrene sulfonic acid, naphthyl vinyl sulfonic acid, divinylbenzene sulfonic acid, or the like, for example.

At least a portion of the aromatic sulfonic acid monomer unit may be in the form of a neutralized salt that is an alkali metal salt or an ammonium salt. The alkali metal salt may be a lithium salt, a sodium salt, a potassium salt, a rubidium salt, or a cesium salt, for example, and is preferably a sodium salt or a lithium salt.

When all monomer units are taken to be 100 parts by mass in the copolymer constituting the dispersant (B), the content of the aromatic sulfonic acid monomer unit is preferably 3 parts by mass or more, more preferably 5 parts by mass or more, and even more preferably 10 parts by mass or more, and is preferably 40 parts by mass or less, more preferably 35 parts by mass or less, and even more preferably 30 parts by mass or less. When the proportional content of the aromatic sulfonic acid monomer unit in the copolymer constituting the dispersant (B) is not less than any of the lower limits set forth above, paste dispersibility of an obtained conductive material paste can be improved. On the other hand, when the proportional content of the aromatic sulfonic acid monomer unit in the copolymer constituting the dispersant (B) is not more than any of the upper limits set forth above, suppression of the rate of resistance increase in a high-temperature storage test and cycle characteristics of an obtained non-aqueous electrolyte solution secondary battery can be improved.

### <<Other monomer units>>

No specific limitations are placed on monomers that can form other monomer units that are constituents of the copolymer constituting the dispersant (B) so long as they are monomers that are copolymerizable with a monomer including a carbon-carbon unsaturated bond. For example, a monomer other than the unsaturated carboxylic acid monomers, (meth)acrylamide group-containing monomers, and aromatic sulfonic acid monomers described above that includes a carbon-carbon unsaturated bond may be used. Examples of such monomers that include a carbon-carbon unsaturated bond include cyano group-containing vinyl monomers, amino group-containing vinyl monomers, pyridyl group-containing vinyl monomers, and alkoxyl group-containing vinyl monomers. One monomer that is copolymerizable with a monomer including a carbon-carbon unsaturated bond such as described above may be used individually, or two or more of such monomers may be used in combination in a freely selected ratio.

### <<Weight-average molecular weight>>

The weight-average molecular weight of the copolymer constituting the dispersant (B) is preferably 4,000 or more, more preferably 8,000 or more, and even more preferably 10,000 or more, and is preferably 2,000,000 or less, more preferably 1,000,000 or less, and even more preferably 800,000 or less. When the weight-average molecular weight of the dispersant (B) is not less than any of the lower limits set forth above, dispersibility of the conductive material paste can be improved. On the other hand, when the weight-average molecular weight of the copolymer constituting the dispersant (B) is not more than any of the upper limits set forth above, the solid content concentration of the conductive material paste can be increased.

Note that the "weight-average molecular weight" of a polymer referred to in the present disclosure can be measured by a method described in the EXAMPLES section.

### <<Production method of dispersant (B)>>

No specific limitations are placed on the method by which the dispersant (B) is produced. For example, the dispersant (B) may be produced by polymerizing a monomer composition containing one type or two or more types of monomers in an aqueous solvent. Note that the proportional content of each monomer in the monomer composition can be set in accordance with the desired proportional contents of monomer units in the polymer.

The polymerization method can be a method such as solution polymerization, suspension polymerization, bulk polymerization, or emulsion polymerization without any specific limitations. Moreover, ionic polymerization, radical polymerization, living radical polymerization, various types of condensation polymerization, addition polymerization, and so forth can be adopted as the polymerization reaction. Furthermore, a known emulsifier and/or polymerization initiator can be used in the polymerization as necessary.

### «Proportional content of dispersant (B)»

The proportional content of solid content of the dispersant (B) relative to all solid content of the conductive material paste may be 5 mass% or more, preferably 10 mass% or more, and more preferably 15 mass% or more, for example. Moreover, this proportional content may be 70 mass% or less, preferably 50 mass% or less, and more preferably 40 mass% or less, for example. When the proportional content of the dispersant (B) is not less than any of the lower limits set forth above, paste dispersibility of an obtained conductive material paste and slurry viscosity stability of an obtained slurry composition can be improved. On the other hand, when the proportional content of the dispersant (B) is not more than any of the upper limits set forth above, the proportional content of the carbon nanotubes (A) can be increased, electrical contact between the carbon nanotubes (A) in an electrode mixed material layer can be even better ensured, and an effect of reducing internal resistance of an obtained secondary battery and causing the secondary battery to display even better output characteristics can be enhanced.

### <Dispersant (C)>

The dispersant (C) is a thiazoline or derivative thereof. In other words, the dispersant (C) is a compound that has a thiazoline skeleton. In the present specification, "thiazoline" (inclusive of modification terms and parts of compound names) refers to both thiazoline in which a nitrogen atom and a sulfur atom are not adjacent and also isothiazoline. Moreover, the thiazoline or derivative thereof may also be referred to as a "thiazoline-based compound".

The thiazoline-based compound may be a thiazoline that is substituted with one or more substituents or may be a thiazoline condensed ring that is formed through condensation of a thiazoline with another ring and that is optionally also substituted with one or more substituents.

Examples of possible substituents include, but are not limited to, an optionally substituted hydrocarbon group, an oxo substituent, a halogen atom (for example, a chlorine atom, a fluorine atom, a bromine atom, or an iodine atom), a hydroxyl group, a cyano group, an amino group, a carboxyl group, an optionally substituted hydrocarbon-oxy group, and an optionally substituted hydrocarbon-thio group. Examples of the hydrocarbon group (same applies for the "hydrocarbon" of the hydrocarbon-oxy group and the hydrocarbon-thio group) include, but are not limited to, an alkyl group having a carbon number of 1 to 10 (for example, a methyl group, an ethyl group, or a propyl group), an alkenyl group having a carbon number of 2 to 6 (for example, a vinyl group or an allyl group), an alkynyl group having a carbon number of 2 to 6 (for example, an ethynyl group or a propynyl group), a cycloalkyl group having a carbon number of 3 to 10 (for example, a cyclopentyl group or a cyclohexyl group), and an aryl group having a carbon number of 6 to 14 (for example, a phenyl group). Examples of substituents that may be substituted into the optionally substituted hydrocarbon group, the optionally substituted hydrocarbon-oxy group, and the optionally substituted hydrocarbon-thio group include the substituents that were previously described, but are not limited thereto.

Examples of the ring that may be condensed with a thiazoline include, but are not limited to, a hydrocarbon ring (aliphatic hydrocarbon ring or aromatic hydrocarbon ring) and a heterocyclic ring (non-aromatic heterocyclic ring or aromatic heterocyclic ring). Examples of the aliphatic hydrocarbon ring include, but are not limited to, a cycloalkane ring (for example, a cyclopropane ring, a cyclobutane ring, a cyclopentane ring, or a cyclohexane ring) and a cycloolefin ring (for example, a cyclopropene ring, a cyclobutene ring, a cyclopentene ring, or a cyclohexene ring). Examples of the aromatic hydrocarbon ring include, but are not limited to, a benzene ring and a naphthalene ring. Examples of the non-aromatic heterocyclic ring include, but are not limited to, a pyrrolidine ring, a tetrahydrofuran ring, a tetrahydrothiophene ring, a pyrroline ring, a pyrrole ring, a dihydrofuran ring, a dihydrothiophene ring, a piperidine ring, a piperazine ring, a tetrahydropyran ring, a morpholine ring, a thiane ring, a thiomorpholine ring, a pyran ring, an oxazine ring, a thiopyran ring, and a thiazine ring. Examples of the aromatic heterocyclic ring include, but are not limited to, a furan ring, an oxazole ring, an isoxazole ring, a thiophene ring, a thiazole ring, an isothiazole ring, a pyridine ring, a pyridazine ring, a pyrimidine ring, a pyrazine ring, and a triazine ring.

The thiazoline-based compound is preferably an isothiazoline-based compound from a viewpoint of improving paste dispersibility of an obtained conductive material paste and improving cycle characteristics and suppression of the rate of resistance increase in a high-temperature storage test of an obtained non-aqueous electrolyte solution secondary battery. The isothiazoline-based compound may, for example, have a structure indicated in the following formula (1). 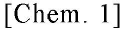 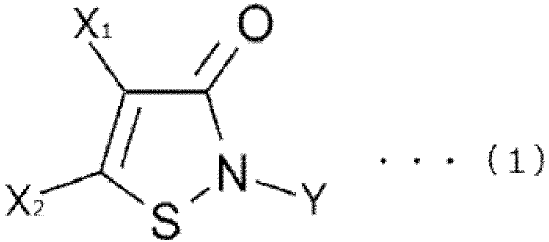 (In formula (1), Y is a hydrogen atom or an optionally substituted hydrocarbon group, and X₁ and X₂ are, independently of each other, a hydrogen atom, a halogen atom, or an optionally substituted alkyl group having a carbon number of 1 to 6, or X₁ and X₂ form an aromatic ring together. Note that in a case in which X₁ and X₂ do not form an aromatic ring together, X₁ and X₂ may be the same or may be different from each other.)

The hydrocarbon group of Y in formula (1) may be an alkyl group having a carbon number of 1 to 10 (methyl group, etc.), an alkenyl group having a carbon number of 2 to 6 (vinyl group, allyl group, etc.), an alkynyl group having a carbon number of 2 to 6 (ethynyl group, propynyl group, etc.), a cycloalkyl group having a carbon number of 3 to 10 (cyclopentyl group, cyclohexyl group, etc.), an aryl group having a carbon number of 6 to 14 (phenyl group, etc.), or the like, for example.

All or a portion of hydrogen atoms in the hydrocarbon group of Y described above may be replaced with a substituent. This substituent may be a hydroxyl group, a halogen atom (for example, a chlorine atom, a fluorine atom, a bromine atom, or an iodine atom), a cyano group, an amino group, a carboxyl group, an alkoxy group having a carbon number of 1 to 4 (for example, a methoxy group or an ethoxy group), an aryloxy group having a carbon number of 6 to 10 (for example, a phenoxy group), an alkylthio group having a carbon number of 1 to 4 (for example, a methylthio group or an ethylthio group), an arylthio group having a carbon number of 6 to 10 (for example, a phenylthio group), or the like, for example. Note that in a case in which the hydrocarbon group of Y has a plurality of substituents, these substituents may be the same or may be different from one another.

In formula (1), Y is preferably a methyl group or a hydrogen atom, and is more preferably a hydrogen atom.

The halogen atom of X₁ and X₂ in formula (1) may be a fluorine atom, a chlorine atom, a bromine atom, or an iodine atom, for example.

The alkyl group having a carbon number of 1 to 6 of X₁ and X₂ in formula (1) may be a methyl group, an ethyl group, a propyl group, an isopropyl group, a butyl group, an isobutyl group, a sec-butyl group, a tert-butyl group, a pentyl group, or the like, for example. All or a portion of hydrogen atoms in these hydrocarbon groups may be replaced with a substituent. This substituent may be the same as any of those previously described for a substituent in the hydrocarbon group of Y.

The aromatic ring formed by X₁ and X₂ together in formula (1) may be a benzene ring or the like.

Hereinafter, a compound of formula (1) in which X₁ and X₂ form an aromatic ring together is referred to as an "aromatic ring isothiazoline-based compound", whereas a compound of formula (1) in which X₁ and X₂ do not form an aromatic ring together is referred to as a "non-aromatic ring isothiazoline-based compound".

In formula (1), it is preferable that X₁ and X₂ are each a hydrogen atom or form an aromatic ring together, and it is more preferable that X₁ and X₂ form an aromatic ring together from a viewpoint of causing even better dispersion of the carbon nanotubes (A) in the conductive material paste and further inhibiting deposition of lithium metal on a negative electrode in the case of a lithium ion secondary battery. In other words, the isothiazoline-based compound is preferably an aromatic ring isothiazoline-based compound.

### {Benzisothiazoline-based compound}

The aromatic ring isothiazoline-based compound is preferably a benzisothiazoline-based compound having a structure indicated by the following formula (2) in which X₁ and X₂ form a benzene ring as an aromatic ring. 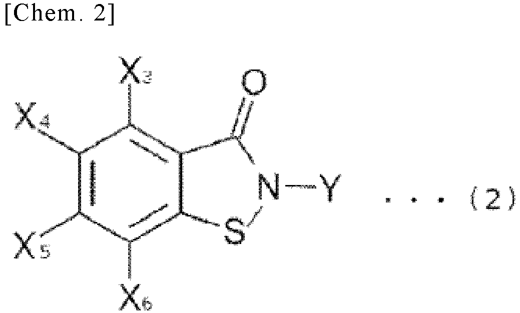 (In formula (2), Y is the same as in formula (1), and X₃ to X₆ represent, independently of one another, any one of a hydrogen atom, a halogen atom, a hydroxyl group, a cyano group, an amino group, a carboxyl group, an alkyl group having a carbon number of 1 to 4, and an alkoxy group having a carbon number of 1 to 4. Note that X₃ to X₆ may be the same or may be different from one another.)

The halogen atom of X₃ to X₆ in formula (2) may be any of the same halogen atoms as for X₁ and X₂ in formula (1).

The alkyl group having a carbon number of 1 to 4 in formula (2) may be a methyl group, an ethyl group, a propyl group, a butyl group, an isobutyl group, a sec-butyl group, or a tert-butyl group.

The alkoxy group having a carbon number of 1 to 4 in formula (2) may be a methoxy group, an ethoxy group, or the like.

In formula (2), it is preferable that Y and X₃ to X₆ are hydrogen atoms.

### {Specific examples of thiazoline-based compound}

The thiazoline-based compound may, for example, be a thiazoline, an alkylthiazoline (for example, methylthiazoline, ethylthiazoline, or octylthiazoline), a cycloalkylthiazoline (for example, cyclohexylthiazoline), a halothiazoline (for example, chlorothiazoline or dichlorothiazoline), an alkylhalothiazoline (for example, methylchlorothiazoline, ethylchlorothiazoline, octylchlorothiazoline, methyldichlorothiazoline, ethyldichlorothiazoline, or octyldichlorothiazoline), a cycloalkylhalothiazoline (for example, cyclohexylchlorothiazoline or cyclohexyldichlorothiazoline), a thiazolinone, an alkylthiazolinone (for example, methylthiazolinone, ethylthiazolinone, or octylthiazolinone), a cycloalkylthiazolinone (for example, cyclohexylthiazolinone), a halothiazolinone (for example, chlorothiazolinone or dichlorothiazolinone), an alkylhalothiazolinone (for example, methylchlorothiazolinone, ethylchlorothiazolinone, octylchlorothiazolinone, methyldichlorothiazolinone, ethyldichlorothiazolinone, or octyldichlorothiazolinone), a cycloalkylhalothiazolinone (for example, cyclohexylchlorothiazolinone or cyclohexyldichlorothiazolinone), a benzothiazoline, an alkylbenzothiazoline (for example, methylbenzothiazoline, ethylbenzothiazoline, or octylbenzothiazoline), a cycloalkylbenzothiazoline (for example, cyclohexylbenzothiazoline), a halobenzothiazoline (for example, chlorobenzothiazoline or dichlorobenzothiazoline), an alkylhalobenzothiazoline (for example, methylchlorobenzothiazoline, ethylchlorobenzothiazoline, octylchlorobenzothiazoline, methyldichlorobenzothiazoline, ethyldichlorobenzothiazoline, or octyldichlorobenzothiazoline), a cycloalkylhalobenzothiazoline (for example, cyclohexylchlorobenzothiazoline or cyclohexyldichlorobenzothiazoline), a benzothiazolinone, an alkyl benzothiazolinone (for example, methylbenzothiazolinone, ethylbenzothiazolinone, or octylbenzothiazolinone), a cycloalkylbenzothiazolinone (for example, cyclohexylbenzothiazolinone), a halobenzothiazolinone (for example, chlorobenzothiazolinone or dichlorobenzothiazolinone), an alkylhalobenzothiazolinone (for example, methylchlorobenzothiazolinone, ethylchlorobenzothiazolinone, octyl chlorobenzothiazolinone, methyldichlorobenzothiazolinone, ethyldichlorobenzothiazolinone, or octyldichlorobenzothiazolinone), or a cycloalkylhalobenzothiazolinone (for example, cyclohexylchlorobenzothiazolinone or cyclohexyldichlorobenzothiazolinone). One of these thiazoline-based compounds may be used individually, or two or more of these thiazoline-based compounds may be used in combination.

Of these examples, the isothiazoline-based compound represented by formula (1) may, for example, be a non-aromatic ring isothiazoline-based compound such as methylchlorothiazolinone (for example, 5-chloro-2-methyl-4-isothiazolin-3-one), methylthiazolinone (for example, 2-methyl-4-isothiazolin-3-one (MIT)), octylthiazolinone (for example, 2-n-octyl-4-isothiazolin-3-one), octyldichlorothiazolinone (for example, 4,5-dichloro-2-n-octyl-4-isothiazolin-3-one), ethylthiazolinone (for example, 2-ethyl-4-isothiazolin-3-one), cyclohexyldichlorothiazolinone (for example, 4,5-dichloro-2-cyclohexyl-4-isothiazolin-3-one), ethyl chlorothiazolinone (for example, 5-chloro-2-ethyl-4-isothiazolin-3-one), or octylchlorothiazolinone (for example, 5-chloro-2-t-octyl-4-isothiazolin-3-one); or an aromatic ring isothiazoline-based compound such as benzothiazolinone (for example, 1,2-benzisothiazolin-3-one (BIT)) or methylbenzothiazolinone (for example, N-methyl-1,2-benzisothiazolin-3-one). One of these compounds may be used individually, or two or more of these compounds may be used in combination.

Of these compounds, 2-methyl-4-isothiazolin-3-one (MIT) and 1,2-benzisothiazolin-3-one (BIT) are preferable, and 1,2-benzisothiazolin-3-one (BIT) is particularly preferable from a viewpoint of causing even better conductive carbon dispersion in the conductive material paste and even further inhibiting deposition of lithium metal on a negative electrode of a secondary battery.

### <<Proportional content of dispersant (C)>>

The proportional content of solid content of the dispersant (C) relative to all solid content of the conductive material paste may be 0.1 mass% or more, preferably 0.2 mass% or more, and more preferably 0.5 mass% or more, for example. Moreover, this proportional content may be 20 mass% or less, preferably 10 mass% or less, and more preferably 5 mass% or less, for example. When the proportional content of the dispersant (C) is not less than any of the lower limits set forth above, paste dispersibility of an obtained conductive material paste, slurry viscosity stability of an obtained slurry composition, and cycle characteristics and suppression of the rate of resistance increase in a high-temperature storage test of an obtained non-aqueous electrolyte solution secondary battery can be improved. On the other hand, when the proportional content of the dispersant (C) is not more than any of the higher limits set forth above, the proportional contents of the carbon nanotubes (A) and the dispersant (B) can be increased, and thus an effect of reducing internal resistance of an obtained secondary battery and causing the secondary battery to display even better output characteristics, for example, can be enhanced.

### <Other components>

Examples of other components that can be contained in the conductive material paste include, but are not specifically limited to, a dispersion medium other than water, carbon black as a conductive material other than the carbon nanotubes (A), and components that are subsequently described in the "Slurry composition for non-aqueous electrolyte solution secondary battery negative electrode" section with the exception of an electrode active material. One other component can be used individually, or two or more other components can be used in combination.

### <Dispersion medium other than water>

The dispersion medium other than water may be an organic solvent. The organic solvent is not specifically limited and may be an alcohol such as methanol, ethanol, n-propanol, isopropanol, n-butanol, isobutanol, t-butanol, pentanol, hexanol, heptanol, octanol, nonanol, decanol, or amyl alcohol; a ketone such as acetone, methyl ethyl ketone, or cyclohexanone; an ester such as ethyl acetate or butyl acetate; an ether such as diethyl ether, dioxane, or tetrahydrofuran; an amide organic solvent such as N,N-dimethylformamide or N-methyl-2-pyrrolidone (NMP); an aromatic hydrocarbon such as toluene, xylene, chlorobenzene, orthodichlorobenzene, or paradichlorobenzene; or the like, for example. One organic solvent can be used individually, or two or more organic solvents can be used in combination.

### <<Carbon black>>

The presently disclosed conductive material paste may further contain carbon black in order to improve electrical conductivity and reduce resistance. The carbon black that is used herein is an assembly in which a number of layers of graphitic carbon microcrystals assemble to form a turbostratic structure and specific examples thereof include acetylene black, Ketjenblack, furnace black, channel black, and thermal lamp black. Among carbon blacks, acetylene black, furnace black, and Ketjenblack are particularly preferable in terms that a conductive adhesive layer can be packed densely, resistance to electron movement can be reduced, and internal resistance of an electrochemical device can be reduced.

The carbon black that is used herein preferably includes a heteroelement differing from carbon that is a main component thereof. The heteroelement may, more specifically, be silicon, nitrogen, or boron, with boron being particularly preferable in terms that resistance to electron movement can be reduced and internal resistance of an electrochemical device can be reduced.

The content of the heteroelement in the carbon black that is used herein is preferably within a range of 0.01 weight% to 20 weight%, more preferably within a range of 0.05 weight% to 10 weight%, and particularly preferably within a range of 0.1 weight% to 5 weight%. When the content of the heteroelement in the carbon black is within any of these ranges, resistance to electron movement is reduced, and internal resistance of an electrochemical device is reduced.

The specific surface area of the carbon black that is used herein is not less than 25 m²/g and not more than 300 m²/g, preferably not less than 30 m²/g and not more than 200 m²/g, and more preferably not less than 40 m²/g and not more than 150 m²/g from a viewpoint of maintaining good electrical conductivity. An excessively large specific surface area results in high viscosity and makes it difficult to produce a slurry that is suitable for highspeed coating. Conversely, an excessively small specific surface area results in reduction of electrical conductivity. In addition, dispersibility of a slurry deteriorates.

The volume-average particle diameter of the carbon black that is used herein is preferably not less than 0.01 µm and less than 1.0 µm, more preferably not less than 0.05 µm and less than 0.8 µm, and particularly preferably not less than 0.1 µm and less than 0.5 µm. By using carbon black having a volume-average particle diameter that is within any of the ranges set forth above, spherical graphite and the carbon black pack densely in a conductive adhesive layer. Note that the volume-average particle diameter is the volume-average particle diameter that is measured and calculated using a laser diffraction particle size distribution analyzer (for example, SALD-3100 produced by Shimadzu Corporation).

### <<Particulate polymer (binding material)>>

The conductive material paste may further contain a particulate polymer (particulate binder) as a binding material. The particulate polymer includes at least an unsaturated carboxylic acid monomer unit, an aromatic vinyl monomer unit, and a diene monomer unit as polymer constitutional units.

### {Unsaturated carboxylic acid monomer unit}

Examples of the unsaturated carboxylic acid monomer unit that is a constituent of the particulate polymer serving as a binding material include those given as examples of the unsaturated carboxylic acid monomer unit that is a constituent of the dispersant (B).

When all monomer units are taken to be 100 parts by mass in the particulate polymer serving as a binding material, the content of the unsaturated carboxylic acid monomer unit is preferably 2 parts by mass or more, more preferably 4 parts by mass or more, and even more preferably 8 parts by mass or more, and is preferably 20 parts by mass or less, more preferably 25 parts by mass or less, and even more preferably 30 parts by mass or less. When the proportional content of the unsaturated carboxylic acid monomer unit in the particulate polymer serving as a binding material is not less than any of the lower limits set forth above, stability over time of slurry viscosity can be improved. On the other hand, when the proportional content of the unsaturated carboxylic acid monomer unit in the particulate polymer serving as a binding material is not more than any of the upper limits set forth above, the solid content concentration of a slurry can be increased.

### {Aromatic vinyl monomer unit}

Examples of aromatic vinyl monomers that can form the aromatic vinyl monomer unit include styrene, α-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination in a freely selected ratio. Of these aromatic vinyl monomers, styrene is preferable.

When all monomer units are taken to be 100 parts by mass in the particulate polymer serving as a binding material, the content of the aromatic vinyl monomer unit is preferably 20 parts by mass or more, more preferably 25 parts by mass or more, and even more preferably 30 parts by mass or more, and is preferably 90 parts by mass or less, more preferably 80 parts by mass or less, and even more preferably 70 parts by mass or less. When the proportional content of the aromatic vinyl monomer unit in the particulate polymer serving as a binding material is not less than any of the lower limits set forth above, stability during negative electrode slurry production can be increased, and thus slurry viscosity can be restricted from rising. On the other hand, when the proportional content of the aromatic vinyl monomer unit in the particulate polymer serving as a binding material is not more than any of the upper limits set forth above, the degree of swelling in an electrolyte solution that is used in a secondary battery can be set within a suitable range.

### {Diene monomer unit}

Examples of diene monomers that can form the diene monomer unit include aliphatic conjugated diene monomers. Examples of aliphatic conjugated diene monomers that may be used include 1,3-butadiene, isoprene, 2,3-dimethyl-1,3-butadiene, 1,3-pentadiene, 1,3-hexadiene, chloroprene, and cyanobutadiene. One of the conjugated diene monomers described above may be used individually, or two or more of the conjugated diene monomers described above may be used in combination in a freely selected ratio. Of these conjugated diene monomers, 1,3-butadiene and isoprene are preferable in terms of ease of acquisition, and 1,3-butadiene is more preferable.

When all monomer units are taken to be 100 parts by mass in the particulate polymer serving as a binding material, the content of the diene monomer unit is preferably 20 parts by mass or more, more preferably 25 parts by mass or more, and even more preferably 30 parts by mass or more, and is preferably 80 parts by mass or less, more preferably 85 parts by mass or less, and even more preferably 70 parts by mass or less. When the proportional content of the diene monomer unit in the particulate polymer serving as a binding material is not less than any of the lower limits set forth above, binding strength of an electrode can be increased. On the other hand, when the proportional content of the diene monomer unit in the particulate polymer serving as a binding material is not more than any of the upper limits set forth above, mechanical stability during negative electrode slurry production can be maintained.

### {Other monomer units}

No specific limitations are placed on monomers that can form other monomer units that are constituents of the particulate polymer so long as they are monomers that are copolymerizable with a diene monomer. For example, a monomer other than the unsaturated carboxylic acid monomers and aromatic vinyl monomer described above that includes a carbon-carbon unsaturated bond may be used. Examples of such monomers that include a carbon-carbon unsaturated bond include cyano group-containing vinyl monomers, amino group-containing vinyl monomers, pyridyl group-containing vinyl monomers, and alkoxyl group-containing vinyl monomers. One monomer that is copolymerizable with a diene monomer such as described above may be used individually, or two or more of such monomers may be used in combination in a freely selected ratio.

### <Properties of conductive material paste>

The pH of the conductive material paste is preferably 6 or higher, and more preferably 6.5 or higher, and is preferably 9 or lower, and more preferably 8 or lower. When the pH of the conductive material paste is not lower than any of the lower limits set forth above, viscosity stability of a negative electrode slurry can be increased. On the other hand, when the pH of the conductive material paste is not higher than any of the upper limits set forth above, binding strength as a negative electrode can be increased.

### <Production method of conductive material paste>

The presently disclosed conductive material paste can be produced by mixing the above-described carbon nanotubes (A), dispersant (B), dispersant (C), water, and other components that are used as necessary in the above-described amounts.

The mixing described above is preferably performed through a step of producing a premix containing the carbon nanotubes (A), the dispersant (C), and water and a step of adding the dispersant (B) to the premix. By first mixing the carbon nanotubes (A) and the dispersant (C) in the presence of water and then adding the dispersant (B) to the resultant premix in this manner, paste dispersibility of the conductive material paste can be maintained, and provision of a slurry composition for a non-aqueous electrolyte solution secondary battery negative electrode in which slurry viscosity stability is maintained can be enabled while also suppressing the rate of resistance increase in a high-temperature storage test. This is presumed to be because the dispersant (C) can be caused to adsorb to the surface of the carbon nanotubes (A) first, and then the dispersant (B) can be caused to adsorb well via the dispersant (C).

Note that mixing of components can be performed using a known mixing device without any specific limitations. Examples of such mixing devices include a disper blade, a Homo Mixer, a planetary mixer, a kneader, a ball mill, and a bead mill.

### (Slurry composition for non-aqueous electrolyte solution secondary battery negative electrode)

The presently disclosed slurry composition for a non-aqueous electrolyte solution secondary battery negative electrode (hereinafter, also referred to simply as a "slurry composition") contains the conductive material paste set forth above and at least a negative electrode active material (for example, a silicon-based active material), and may further contain a thickener, a binding material, carbon black, a negative electrode active material (for example, a silicon-based active material), and other optional components as necessary.

In the case of a slurry composition that contains the conductive material paste set forth above in this manner, slurry viscosity stability is maintained. Moreover, through an electrode that includes an electrode mixed material layer formed from this slurry composition, it is possible to suppress the rate of resistance increase in a high-temperature storage test with respect to a non-aqueous electrolyte solution secondary battery.

### <Negative electrode active material>

### «Silicon-based active material»

The silicon-based active material may be silicon (Si), a silicon-containing alloy, SiO, SiOₓ, a composite of a Si-containing material and conductive carbon obtained by coating or combining the Si-containing material with the conductive carbon, or the like, for example.

The particle diameter of the silicon-based active material can be the same as that of a conventionally used electrode active material without any specific limitations.

Moreover, the amount of the silicon-based active material in the slurry composition can be set within a conventionally used range without any specific limitations.

Furthermore, one silicon-based active material can be used individually, or two or more silicon-based active materials can be used in combination.

### <<Other negative electrode active material>>

Examples of other negative electrode active materials that may be used include carbon-based negative electrode active materials, metal-based negative electrode active materials, and negative electrode active materials that are combinations thereof without any specific limitations.

The term "carbon-based negative electrode active material" refers to an active material having carbon as a main framework that allows insertion (also referred to as "doping") of lithium. The carbon-based negative electrode active material may be a carbonaceous material or a graphitic material, for example.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

Moreover, the term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials that may be used include lithium metal, simple substances of metals that can form a lithium alloy (for example, Ag, Al, Ba, Bi, Cu, Ga, Ge, In, Ni, P, Pb, Sb, Sn, Sr, Zn, and Ti) and alloys thereof, and oxides, sulfides, nitrides, carbides, and phosphides of any of the preceding examples.

Note that the particle diameter of the other negative electrode active material can be the same as that of a conventionally used electrode active material without any specific limitations.

Moreover, the amount of the negative electrode active material in the slurry composition can be set within a conventionally used range without any specific limitations.

Furthermore, one negative electrode active material can be used individually, or two or more negative electrode active materials can be used in combination.

### <<Amounts of negative electrode active material and silicon-based active material>>

The proportional content of the negative electrode active material relative to all solid content in the slurry composition may be 90 mass% or more, preferably 92 mass% or more, and more preferably 95 mass% or more, for example, and may be 99 mass% or less, preferably 98.5 mass% or less, and more preferably 98 mass% or less, for example. When the proportional content of the negative electrode active material is not less than any of the lower limits set forth above, the capacity of an obtained secondary battery can be increased. Moreover, when the proportional content of the negative electrode active material is not more than any of the upper limits set forth above, cycle characteristics of an obtained secondary battery can be improved.

The proportional content of the carbon nanotubes (A) relative to the negative electrode active material may be 0.01 mass% or more, preferably 0.05 mass% or more, and more preferably 0.1 mass% or more, for example, and may be 5 mass% or less, preferably 2 mass% or less, and more preferably 1 mass% or less, for example.

The proportional content of the silicon-based active material relative to all solid content of the slurry composition may be 3 mass% or more, preferably 5 mass% or more, and more preferably 8 mass% or more, for example, and may be 40 mass% or less, preferably 35 mass% or less, and more preferably 30 mass% or less, for example. When the proportional content of the silicon-based active material is not less than any of the lower limits set forth above, the capacity of an obtained secondary battery can be even further increased. Moreover, when the proportional content of the silicon-based active material is not more than any of the upper limits set forth above, cycle characteristics of an obtained secondary battery can be further improved.

The proportional content of the carbon nanotubes (A) relative to the silicon-based active material may be 0.01 mass% or more, preferably 0.05 mass% or more, and more preferably 0.1 mass% or more, for example, and may be 5 mass% or less, preferably 3 mass% or less, and more preferably 1 mass% or less, for example.

### <Thickener>

The thickener is not specifically limited and may be carboxymethyl cellulose, methyl cellulose, hydroxypropyl methyl cellulose, hydroxyethyl methyl cellulose, polyvinyl alcohol, polymethacrylic acid, polyacrylic acid, or an acrylamide/acrylic acid/N-hydroxyethylacrylamide terpolymer, for example. One of these thickeners can be used individually, or two or more of these thickeners can be used in combination. Moreover, these thickeners can be used in an unneutralized state or a neutralized state. Of these thickeners, an acrylamide/acrylic acid/N-hydroxyethylacrylamide terpolymer is preferable.

The weight-average molecular weight of the thickener is preferably 500,000 or more, and more preferably 800,000 or more, and is preferably 10,000,000 or less, and more preferably 8,000,000 or less. Peel strength of an electrode can be increased when the weight-average molecular weight of the thickener is 500,000 or more, whereas cycle characteristics of an electrochemical device can be further improved when the weight-average molecular weight of the thickener is 10,000,000 or less.

The amount of the above-described thickener in the presently disclosed slurry composition is preferably 0.2 parts by mass or more, and more preferably 0.4 parts by mass or more per 100 parts by mass of the negative electrode active material, and is preferably 5.0 parts by mass or less, and more preferably 4.0 parts by mass or less per 100 parts by mass of the negative electrode active material. Cycle characteristics of an electrochemical device can be further enhanced when the amount of the thickener is 0.2 parts by mass or more per 100 parts by mass of the negative electrode active material, whereas the capacity of an electrochemical device can be improved when the amount of the thickener is 5.0 parts by mass or less per 100 parts by mass of the negative electrode active material.

### <Binding material>

The binding material can be the previously described particulate polymer (particulate binder). The amount of the above-described binding material in the presently disclosed slurry composition is preferably not less than 0.1 parts by mass and not more than 2.0 parts by mass per 100 parts by mass of the electrode active material. When the amount of the binding material per 100 parts by mass of the electrode active material is within the range set forth above, peel strength of an electrode can be increased while also further improving cycle characteristics of an electrochemical device.

### <Other optional components>

Examples of other optional components that can be contained in the slurry composition include reinforcing materials, antioxidants, and additives for electrolyte solution having a function of inhibiting electrolyte solution decomposition. One of these optional components can be used individually, or two or more of these optional components can be used in combination.

### <Production method of slurry composition>

No specific limitations are placed on the mixing method when the slurry composition is obtained through mixing of the above-described components. For example, a known mixing device can be used.

### (Negative electrode for non-aqueous electrolyte solution secondary battery)

The presently disclosed negative electrode for a non-aqueous electrolyte solution secondary battery (hereinafter, also referred to simply as the "presently disclosed negative electrode") includes a negative electrode mixed material layer that is obtained through formation using the presently disclosed slurry composition set forth above. More specifically, the presently disclosed negative electrode normally has a structure in which a negative electrode mixed material layer formed of a dried product of the presently disclosed slurry composition is included on a current collector. Accordingly, the negative electrode mixed material layer contains the carbon nanotubes (A), the dispersant (B), and the dispersant (C), and may contain a thickener, a binding material, carbon black, a negative electrode active material (for example, a silicon-based active material), and other optional components as necessary. Note that the preferred ratio of the components in the electrode mixed material layer is the same as the preferred ratio of the components in the slurry composition.

The presently disclosed negative electrode can cause a non-aqueous electrolyte solution secondary battery to display excellent cycle characteristics as a result of including a negative electrode mixed material layer that has been formed using the presently disclosed slurry composition set forth above.

### <Current collector>

The current collector for the negative electrode is formed of a material having electrical conductivity and electrochemical durability. The current collector may, for example, be a current collector that is formed of iron, copper, aluminum, nickel, stainless steel, titanium, tantalum, gold, platinum, or the like. One of these materials can be used individually, or two or more of these materials can be used in combination. The current collector for the negative electrode is preferably a current collector formed of copper (copper foil, etc.).

### <Production method of negative electrode>

No specific limitations are placed on the method by which the presently disclosed negative electrode is produced. For example, the presently disclosed negative electrode can be produced by applying the presently disclosed slurry composition set forth above onto at least one side of the current collector and then drying the slurry composition to form an electrode mixed material layer. In more detail, this production method includes a step of applying the slurry composition onto at least one side of the current collector (application step) and a step of drying the slurry composition that has been applied onto at least one side of the current collector to form an electrode mixed material layer on the current collector (drying step).

### «Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

### <<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain a negative electrode that includes the current collector and the electrode mixed material layer.

After the drying step, the electrode mixed material layer may be further subjected to a pressing process, such as mold pressing or roll pressing. This pressing process can improve peel strength of the negative electrode.

### (Non-aqueous electrolyte solution secondary battery)

The presently disclosed non-aqueous electrolyte solution secondary battery includes the presently disclosed negative electrode set forth above. Moreover, the presently disclosed non-aqueous electrolyte solution secondary battery has excellent suppression of the rate of resistance increase in a high-temperature storage test and cycle characteristics as a result of including the presently disclosed negative electrode. Note that the presently disclosed non-aqueous electrolyte solution secondary battery may be a lithium ion secondary battery, a sodium ion secondary battery, or the like, for example.

The following describes the configuration of a lithium ion secondary battery as one example of the presently disclosed non-aqueous electrolyte solution secondary battery. This lithium ion secondary battery includes the presently disclosed negative electrode, a positive electrode, an electrolyte solution, and a separator.

### <Positive electrode>

Any known positive electrode for a non-aqueous electrolyte solution secondary battery (for example, a lithium ion secondary battery) can be used without any specific limitations as the positive electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and may be preferably 0.5 mass% to 15 mass%, more preferably 2 mass% to 13 mass%, and even more preferably 5 mass% to 10 mass%, for example. Known additives such as fluoroethylene carbonate (FEC), vinylene carbonate (VC), and ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of non-aqueous electrolyte solution secondary battery>

The non-aqueous electrolyte solution secondary battery in accordance with the present disclosure can be produced by, for example, stacking the presently disclosed negative electrode and the positive electrode with the separator in-between, performing rolling, folding, or the like of the resultant laminate, as necessary, in accordance with the battery shape, placing the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the non-aqueous electrolyte solution secondary battery may be a coin type, a button type, a sheet type, a cylinder type, a prismatic type, a flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the weight-average molecular weight of a water-soluble polymer (corresponding to dispersant (B)), the dispersion stability of a conductive material paste, the viscosity stability of a slurry composition, the water content of a negative electrode, the cycle characteristics of a lithium ion secondary battery, and the rate of resistance increase in a high-temperature storage test of a lithium ion secondary battery.

### <Weight-average molecular weight>

A water-soluble polymer (corresponding to dispersant (B)) was taken as a measurement subject polymer to measure weight-average molecular weight by gel permeation chromatography (GPC) according to the following procedure. First, the measurement subject polymer was added to approximately 5 mL of eluent such that the solid content concentration was approximately 0.5 g/L and was gradually dissolved at room temperature. Once dissolution of the polymer was visually confirmed, the solution was gently filtered using a filter having a pore diameter of 0.45 µm to prepare a measurement sample. The weight-average molecular weight was then calculated as a standard substance-equivalent value by using a standard substance to prepare a calibration curve. Note that the measurement conditions were as follows.

### <<Measurement conditions>>

Column: Produced by Showa Denko K.K.; product name: Shodex OHpak (SB-G, SB-807HQ, SB-806MHQ)
Eluent: 0.1 M Tris buffer solution (0.1 M potassium chloride added)
Flow rate: 0.5 mL/min
Sample concentration: 0.05 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Dispersion stability>

The viscosity η1 of a conductive material paste straight after production was measured at a point 60 seconds after the start of spindle rotation using a B-type viscometer under conditions of a temperature of 25°C and a spindle rotation speed of 60 rpm. The conductive material paste for which η1 had been measured was then stored under conditions of 10 days at rest at 25°C, and the viscosity η2 after storage was measured in the same way as the viscosity η1. A ratio of η2 relative to η1 (η2/η1) was taken as a paste viscosity ratio and was evaluated by the following standard. A value of closer to 1.0 for the paste viscosity ratio indicates that viscosity increase of the conductive material paste is suppressed and that the conductive material paste has excellent dispersion stability.
A: Paste viscosity ratio of less than 1.15
B: Paste viscosity ratio of not less than 1.15 and less than 1.6
C: Paste viscosity ratio of not less than 1.6 and less than 2.0
D: Paste viscosity ratio of 2.0 or more

### <Viscosity stability>

The viscosity η3 of a slurry composition straight after production was measured at a point 60 seconds after the start of spindle rotation using a B-type viscometer under conditions of a temperature of 25°C and a spindle rotation speed of 60 rpm. The slurry composition for which η3 had been measured was then stored under conditions of 3 days at rest at 25°C, and the viscosity η4 after storage was measured in the same way as the viscosity η3. A ratio of η4 relative to η3 (η4/η3) was taken as a slurry viscosity ratio and was evaluated by the following standard. A value of closer to 1.0 for the slurry viscosity ratio indicates that thickening of the slurry composition is suppressed and that the slurry composition has better viscosity stability.
A: Slurry viscosity ratio of less than 1.2
B: Slurry viscosity ratio of not less than 1.2 and less than 1.4
C: Slurry viscosity ratio of not less than 1.4 and less than 1.5
D: Slurry viscosity ratio of 1.5 or more

### <Water content>

A negative electrode obtained in each example or comparative example was cut out to a size of 10 cm in width by 10 cm in length to obtain a test specimen. The test specimen was left at a temperature of 25°C and a dew point of -60°C for 24 hours. Thereafter, the water content of the test specimen was measured by the Karl Fischer method (water vaporization method of JIS K-0068(2001); vaporization temperature: 150°C) using a coulometric titration water meter and was evaluated by the following standard. A lower water content in the test specimen indicates that the negative electrode has better water removal properties.
A: Water content of less than 500 ppm
B: Water content of not less than 500 ppm and less than 700 ppm
C: Water content of not less than 700 ppm and less than 1,000 ppm
D: Water content of 1,000 ppm or more

### <Cycle characteristics>

A lithium ion secondary battery was left at rest in a 25°C environment for 24 hours after injection of electrolyte solution. Next, the lithium ion secondary battery was subjected to a charge/discharge operation of charging to a cell voltage of 4.35 V and discharging to a cell voltage of 2.75 V by a 0.1C constant-current method, and the initial capacity C0 was measured. In addition, the lithium ion secondary battery was subjected to 100 charge/discharge cycles of charging to a cell voltage of 4.35 V by a 1.0C constant-current method and discharging to a cell voltage of 2.75 V by the same constant-current method as in the charging mode in a 25°C environment, and the capacity C1 after 100 cycles was measured. A capacity maintenance rate (%) was calculated (= C1/C0 × 100) and was evaluated by the following standard. A higher capacity maintenance rate indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### <Rate of resistance change in high-temperature storage test>

A lithium ion secondary battery was left at rest in a 25°C environment for 24 hours after injection of electrolyte solution. Next, the lithium ion secondary battery was subjected to a charge/discharge operation of charging to a cell voltage of 4.35 V and discharging to a cell voltage of 2.75 V by a 0.1C constant-current method, and the initial capacity was measured. Thereafter, the lithium ion secondary battery was charged to a state of charge (SOC) of 50%, was subjected to 30 seconds of charging and 30 seconds of discharging at 1.0C centered on an SOC of 50%, and the voltage change over 30 seconds during charging was divided by the current to calculate the IV resistance R1.

The lithium ion secondary battery was then charged to a cell voltage of 4.35 V by a 0.1C constant-current method once again and was stored for 1 week with the temperature of a constant-temperature tank set to a 60°C environment so as to perform a high-temperature storage test. The IV resistance of the cell after this test was measured in the same manner to determine the IV resistance R2. The rate of resistance change was calculated by (R2/R1) × 100 and was evaluated by the following standard. A rate of resistance change of closer to 100% indicates that the lithium ion secondary battery has better durability in a high-temperature storage test.
A: Rate of resistance change of less than 110%
B: Rate of resistance change of not less than 110% and less than 120%
C: Rate of resistance change of not less than 120% and less than 140%
D: Rate of resistance change of 140% or more

### (Example 1)

### <Production of water-soluble polymer>

A 1.5 L glass flask equipped with a stirring blade was charged with 900 parts of deionized water, this deionized water was heated to a temperature of 40°C, and the inside of the flask was purged with nitrogen gas at a flow rate of 100 mL/min. Next, 30 parts of acrylic acid as an unsaturated carboxylic acid monomer, 40 parts of acrylamide as a (meth)acrylamide group-containing monomer, and 30 parts of sodium styrenesulfonate as an aromatic sulfonic acid monomer were mixed and were injected into the flask as monomers. Thereafter, deaeration was performed through 60 minutes of nitrogen bubbling at a flow rate of 1.5 L/min using a sintered metal nozzle, and then 10 parts of a 5.0% aqueous solution of ascorbic acid as a polymerization accelerator was added into the flask using a syringe. At 5 minutes after addition of the polymerization accelerator, 10 parts of a 10% aqueous solution of ammonium persulfate as a polymerization initiator was added into the flask using a syringe to initiate a polymerization reaction. At 2 hours after addition of the polymerization initiator, the temperature was raised to 60°C and was held at 60°C for 2 hours so as to cause the polymerization reaction to progress. At 4 hours after addition of the polymerization initiator, the flask was opened to air to end the polymerization reaction, and the pH was adjusted to 8.0 through addition of an 8% aqueous solution of lithium hydroxide while maintaining a temperature of 25°C so as to yield an aqueous solution of a water-soluble polymer (weight-average molecular weight: 106,000) as a dispersant (B).

### <Production of conductive material paste>

A disper blade was used to stir (3,000 rpm, 60 minutes) 100 parts of CNTs (single-walled; length: 6.3 µm; diameter (external diameter): 1.8 nm) as carbon nanotubes (A), 1.0 parts of 1,2-benzisothiazolin-3-one as a dispersant (C), and an appropriate amount of deionized water as a dispersion medium (solvent), and then a bead mill in which zirconia beads of 1 mm in diameter were used was used to perform 30 minutes of mixing at a circumferential speed of 8 m/s. Next, 100 parts (in terms of solid content) of the aqueous solution of the water-soluble polymer as a dispersant (B) that was obtained as described above was added to the resultant premix, and a further 30 minutes of mixing was performed in the bead mill to produce a conductive material paste (solid content concentration: 2.0%). The pH of this conductive material paste was 8.0. Dispersion stability was evaluated for this conductive material paste. The result is shown in Table 1.

### <Production of particulate binder>

A particulate binder (particulate polymer) serving as a binding material was produced as described below.

A 5 MPa pressure-resistant vessel A equipped with a stirrer was charged with 3.15 parts of styrene, 1.66 parts of 1,3-butadiene, 0.2 parts of sodium lauryl sulfate as an emulsifier, 20 parts of deionized water, and 0.03 parts of potassium persulfate as a polymerization initiator. These materials were thoroughly stirred, were then heated to 60°C to initiate polymerization, and were reacted for 6 hours to yield seed particles.

After this reaction, the temperature was raised to 75°C, addition of a mixture of 53.85 parts of styrene, 31.34 parts of 1,3-butadiene, 10.0 parts of acrylic acid, 0.25 parts of tert-dodecyl mercaptan as a chain transfer agent, and 0.35 parts of sodium lauryl sulfate as an emulsifier that was loaded into a separate vessel B was initiated with respect to the pressure-resistant vessel A, and, simultaneously thereto, addition of 1 part of potassium persulfate as a polymerization initiator was also initiated with respect to the pressure-resistant vessel A so as to initiate a second stage of polymerization.

In other words, the overall monomer composition was 57 parts of styrene, 33 parts of 1,3-butadiene, and 10 parts of acrylic acid.

Addition of the total amount of a mixture containing this monomer composition was completed at 5.5 hours after the start of the second stage of polymerization. Thereafter, a reaction was performed for 6 hours under heating to 85°C. At the point at which the polymerization conversion rate reached 97%, cooling was performed to quench the reaction. A mixture containing this polymerized product was adjusted pH 8 through addition of 5% sodium hydroxide aqueous solution. Unreacted monomer was subsequently removed through thermal-vacuum distillation. Thereafter, cooling was performed to yield a water dispersion of a particulate binder (water-insoluble).

### <Production of slurry composition for negative electrode>

A planetary mixer equipped with a disper blade was charged with 90 parts of artificial graphite (volume-average particle diameter: 24.5 µm; specific surface area: 3.5 m²/g) as a carbon-based negative electrode active material, 10 parts of SiOₓ as a silicon-based negative electrode active material, and 2.0 parts (in terms of solid content) of an aqueous solution of a sodium salt of carboxymethyl cellulose as a thickener. These materials were adjusted to a solid content concentration of 58% with deionized water and were mixed at room temperature for 60 minutes. After mixing, the conductive material paste obtained as described above was added into the planetary mixer such that the carbon nanotubes were 0.1 parts (in terms of solid content) and was mixed. Next, the solid content concentration was adjusted to 50% with deionized water, and 1.0 parts (in terms of solid content) of the water dispersion of the binding material obtained as described above was added to obtain a mixed liquid. The obtained mixed liquid was subjected to defoaming under reduced pressure to yield a slurry composition for a negative electrode having good fluidity. Viscosity stability was evaluated for this slurry composition for a negative electrode. The result is shown in Table 1.

### <Production of negative electrode>

The slurry composition for a negative electrode obtained as described above was applied onto copper foil (current collector) of 16 µm in thickness by a comma coater such as to have a thickness of 105 µm and a coating weight of 10 mg/cm² after drying. The copper foil with the slurry composition for a negative electrode applied thereon was conveyed inside an oven having a temperature of 100°C for 2 minutes and an oven having a temperature of 120°C for 2 minutes at a speed of 0.5 m/min so as to dry the slurry composition for a negative electrode on the copper foil and obtain a negative electrode web. The negative electrode web was rolled by roll pressing to obtain a negative electrode having a negative electrode mixed material layer thickness of 80 µm. Water content was evaluated for this negative electrode. The result is shown in Table 1.

### <Production of positive electrode>

A planetary mixer was charged with 95 parts of LiCoO₂ having a spinel structure as a positive electrode active material, 3 parts in terms of solid content of PVDF (polyvinylidene fluoride) as a binding material for a positive electrode, 2 parts of acetylene black as a conductive material, and 20 parts of N-methylpyrrolidone as a solvent, and these materials were mixed to obtain a slurry composition for a positive electrode.

The obtained slurry composition for a positive electrode was applied onto aluminum foil (current collector) of 20 µm in thickness by a comma coater such as to have a thickness after drying of approximately 100 µm. The aluminum foil with the slurry composition for a positive electrode applied thereon was conveyed inside an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web. The positive electrode web was rolled by roll pressing to obtain a positive electrode having a positive electrode mixed material layer thickness of 70 µm.

### <Acquisition of separator>

A separator made of a single layer of polypropylene (width 65 mm, length 500 mm, thickness 25 µm; produced by dry method; porosity: 55%) was prepared. This separator was cut out as a 5 cm × 5 cm square and was used in production of a lithium ion secondary battery described below.

### <Production of secondary battery>

An aluminum packing case was prepared as a battery case. The positive electrode was cut out as a 4 cm × 4 cm square and was arranged with the surface at the current collector-side in contact with the aluminum packing case. Next, the square separator described above was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a LiPF₆ solution of 1.0 M in concentration (solvent: mixed solvent of ethylene carbonate/diethyl carbonate = 1/2 (volume ratio); additives: fluoroethylene carbonate and vinylene carbonate (each 2 volume% (solvent ratio))) was loaded as an electrolyte solution. The aluminum packing case was then closed by heat sealing at 150°C to tightly seal an opening of the aluminum packing and thereby produce a laminate cell-type lithium ion secondary battery. Cycle characteristics and the rate of resistance increase in a high-temperature storage test were evaluated for this lithium ion secondary battery. The results are shown in Table 1.

### (Example 2)

Various productions, measurements, and evaluations were performed in the same way as in Example 1 with the exception that in production of the water-soluble polymer, 20 parts of acrylic acid as an unsaturated carboxylic acid monomer and 80 parts of acrylamide as a (meth)acrylamide group-containing monomer were used as monomers to obtain an aqueous solution of a water-soluble polymer (weight-average molecular weight: 214,000). The results are shown in Table 1.

### (Example 3)

Various productions, measurements, and evaluations were performed in the same way as in Example 1 with the exception that in production of the conductive material paste, multi-walled CNTs (length: 3.9 µm; diameter (external diameter): 14 nm) were used as carbon nanotubes (A) to obtain a conductive material paste. The results are shown in Table 1.

### (Example 4)

Various productions, measurements, and evaluations were performed in the same way as in Example 3 with the exception that in production of the conductive material paste, 50 parts (in terms of solid content) of the aqueous solution of the water-soluble polymer serving as a dispersant (B) was added. The results are shown in Table 1.

### (Examples 5, 6, and 8)

Various productions, measurements, and evaluations were performed in the same way as in Example 1 with the exception that in production of the water-soluble polymer, acrylic acid as an unsaturated carboxylic acid monomer, acrylamide as a (meth)acrylamide group-containing monomer, and sodium styrenesulfonate as an aromatic sulfonic acid monomer were used as monomers in amounts of 60 parts, 20 parts, and 20 parts, respectively, in Example 5, 72 parts, 24 parts, and 4 parts, respectively, in Example 6, and 15 parts, 55 parts, and 30 parts, respectively, in Example 8 to obtain an aqueous solution of a water-soluble polymer (weight-average molecular weight: 87,000 in Example 5, 87,000 in Example 6, and 25,000 in Example 8). The results are shown in Table 1.

### (Example 7)

Various productions, measurements, and evaluations were performed in the same way as in Example 1 with the exception that in production of the binding material, the amounts of styrene, butadiene, and acrylic acid as monomers were set as 61 parts, 37 parts, and 2 parts, respectively, to obtain a particulate binder (particulate polymer) as a binding material. The results are shown in Table 1.

### (Example 9)

Various productions, measurements, and evaluations were performed in the same way as in Example 1 with the exception that in production of the conductive material paste, 2-methylthiazoline was used as a dispersant (C). The results are shown in Table 1.

### (Comparative Example 1)

Various productions, measurements, and evaluations were performed in the same way as in Example 2 with the exception that in production of the conductive material paste, 0.8 parts of triaminotriazine was used as a dispersant (C). The results are shown in Table 1.

### (Comparative Example 2)

Various productions, measurements, and evaluations were performed in the same way as in Example 1 with the exception that a dispersant (C) was not compounded in production of the conductive material paste. The results are shown in Table 1.

### (Comparative Example 3)

Various productions, measurements, and evaluations were performed in the same way as in Example 1 with the exception that in production of the water-soluble polymer, 21 parts of vinylnaphthalene and 79 parts of allyl sulfonic acid were used as monomers to obtain an aqueous solution of a water-soluble polymer (weight-average molecular weight: 143,000). The results are shown in Table 1.

### (Comparative Example 4)

Various productions, measurements, and evaluations were performed in the same way as in Example 1 with the exception that in production of the water-soluble polymer, only acrylic acid was used as a monomer to obtain an aqueous solution of a water-soluble polymer (weight-average molecular weight: 250,000). The results are shown in Table 1.

### (Comparative Example 5)

Production of a conductive material paste, measurements, and evaluations were performed in the same way as in Example 1 with the exception that in production of the water-soluble polymer, only acrylamide was used as a monomer and lithium hydroxide aqueous solution was not added to obtain an aqueous solution of a water-soluble polymer (weight-average molecular weight: 227,000). However, it was not possible to produce a slurry composition for a negative electrode, and thus subsequent productions, measurements, and evaluations could not be performed. The results are shown in Table 1.

### (Comparative Example 6)

Various productions, measurements, and evaluations were performed in the same way as in Example 1 with the exception that in production of the water-soluble polymer, 40 parts of acrylic acid and 60 parts of styrene sulfonic acid were used as monomers to obtain an aqueous solution of a water-soluble polymer (weight-average molecular weight: 159,000). The results are shown in Table 1.

### (Comparative Example 7)

Various productions, measurements, and evaluations were performed in the same way as in Example 1 with the exception that an aqueous solution of a water-soluble polymer was not added as a dispersant (B) in production of the conductive material paste. The results are shown in Table 1.

### (Comparative Example 8)

Various productions, measurements, and evaluations were performed in the same way as in Example 1 with the exception that an aqueous solution of a water-soluble polymer was not added as a dispersant (B) in production of the conductive material paste and that the aqueous solution of the water-soluble polymer produced in Example 1 was added as an aqueous solution of a thickener in production of the slurry composition for a negative electrode instead. The results are shown in Table 1.

**[Table 1-1]**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| | | Carbon nanotubes (A) | Type (wall format) | Single-walled | Single-walled | Multi-walled | Multi-walled | Single-walled | Single-walled | Single-walled | Single-walled | Single-walled |
| | | | Length [µm] | 6.3 | 6.3 | 3.9 | 3.9 | 6.3 | 6.3 | 6.3 | 6.3 | 6.3 |
| | | | Diameter (external diameter) [nm] | 1.8 | 1.8 | 14 | 14 | 1.8 | 1.8 | 1.8 | 1.8 | 1.8 |
| | | | Amount [mass%] | 100 | 100 | 100 | 100 | 100 | 100 | 100 | 100 | 100 |
| | | Dispersant (B) | Types of monomers | AA/Aamid/SSNa | AN Aamid | AA/Aamid/SSNa | AA/Aamid/ S SN a | AA/Aamid/SSNa | AA/Aamid/SSNa | AA/Aamid/ S SN a | AA/Aamid/SSNa | AA/Aamid/SSNa |
| | Conductive | | Composition ratio [mass%] | 30/40/30 | 20/80 | 30/40/30 | 30/40/30 | 60/20/20 | 72/24/4 | 30/40/30 | 15/55/30 | 30/40/30 |
| | material | | Weight-average molecular weight | 106,000 | 214,000 | 106,000 | 106,000 | 87,000 | 87,000 | 106,000 | 25,000 | 106,000 |
| | paste | | Neutralized salt of unsaturated carboxvlic acid | Li | Li | Li | Li | Li | Li | Li | Li | Li |
| Slurry | | | Amount [mass%] | 100 | 100 | 100 | 50 | 100 | 100 | 100 | 100 | 100 |
| composition | | Dispersant (C) | Type | 1,2-Benzisothiazolin-3-one | 1,2-Benzisothiazolin-3-one | 1,2-Benzisothiazolin-3-one | 1,2-Benzisothiazolin-3-one | 1,2-Benzsothiazolin-3-one | 1,2-Benzisothiazolin-3-one | 1,2-Benzisothiazolin- 3 - one | 1,2-Benzisothiazolin-3-one | 2-Methylthiazoline |
| for negative | | | Amount [mass%] | 1 | 1 | 1 | 1 | 1 | 1 | 1 | 1 | 1 |
| electrode | | Dispersion medium (solvent) | | Water | Water | Water | Water | Water | Water | Water | Water | Water |
| | | pH of conductive material paste | | 8 | 8 | 8 | 8 | 8 | 8 | 8 | 8 | 8 |
| | Thickener | | Type | CMC | CMC | CMC | CMC | CMC | CMC | CMC | CMC | CMC |
| | | | Amount [mass%] | 2,000 | 2,000 | 2,000 | 2,000 | 2,000 | 2,000 | 2,000 | 2,000 | 2,000 |
| | Binding material (particulate binder) | | Types of monomers/ Composition ratio [parts by mass] | St/BD/AA = 57/33/10 | St/BD/AA = 57/33/10 | St/BD/AA = 57/33/10 | St/BD/AA = 57/33/10 | St/BD/AA = 57/33/10 | St/BD/AA = 57/33/10 | St/BD/AA = 61/37/2 | St/BD/AA = 57/33/10 | St/BD/AA = 57/33/10 |
| | | | Amount [mass%] | 1000 | 1000 | 1000 | 1000 | 1000 | 1000 | 1000 | 1000 | 1000 |
| Evaluation | | | Paste dispersibility | A | B | A | A | A | A | A | B | B |
| | | | Slurry viscosity stability | A | A | A | A | A | A | B | A | A |
| | | | Water content in electrode | A | B | A | A | A | A | A | A | A |
| | | | Cvcle characteristics | A | B | B | B | A | A | B | A | B |
| | | | Rate of resistance increase in high-temperature storage test | A | B | A | A | A | B | A | B | B |

**[Table 1-2]**

| | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| | | Carbon nanotubes (A) | Type (wall format) | Single-walled | Single-walled | Single-walled | Single-walled | Single-walled | Single-walled | Single-walled | Single-walled |
| | | | Length [µm] | 6.3 | 6.3 | 6.3 | 6.3 | 6.3 | 6.3 | 6.3 | 6.3 |
| | | | Diameter (external diameter) [nm] | 1.8 | 1.8 | 1.8 | 1.8 | 1.8 | 1.8 | 1.8 | 1.8 |
| | | | Amount [mass%] | 100 | 100 | 100 | 100 | 100 | 100 | 100 | 100 |
| | | Dispersant (B) | Types of monomers | AA/Aamid | AA/Aamid/SSNa | Vinylnaphthalene/ Allyl sulfonic acid | Acrylic acid | Acrylamide | AA/Styrene sulfonic acid | None | None |
| | Conductive | | Composition ratio [mass%] | 2080 | 30/40/30 | 21/79 | - | - | 40/60 | - | - |
| | material | | Weight-average molecular weight | 214,000 | 106,000 | 143,000 | 250,000 | 227,000 | 159,000 | - | - |
| Slurry | paste | | Neutralized salt of unsaturated carboxylic acid | Li | Li | Li | Li | - | Li | - | - |
| composition | | | Amount [mass%] | 100 | 100 | 100 | 100 | 100 | 100 | 100 | 100 |
| for negative | | Dispersant (C) | Type | Triaminotriazine | None | 1,2-Benzisothiazolin-3-one | 1,2-Benzisothiazolin-3-one | 1,2-Benzisothiazolin-3-one | 1,2-Benzisothiazolin-3-one | 1,2-Bemisothiazolin-3-one | 1,2-Benzisothiazolin-3-one |
| electrode | | | Amount [mass%] | 0.8 | | 1 | 1 | 1 | 1 | 1 | 1 |
| | | Dispersion medium (solvent) | | Water | Water | Water | Water | Water | Water | Water | Water |
| | | pH of conductive material paste | | 8 | 8 | 8 | 8 | 8 | 8 | 8 | 8 |
| | Thickener | | pH of conductive material paste Type | CMC | CMC | CMC | CMC | CMC | CMC | CMC | AA/Aamid/SSNa |
| | | | Amount [mass%] | 2,000 | 2,000 | 2,000 | 2,000 | 2,000 | 2,000 | 2,000 | 2000 |
| | Binding material (particulate binder) | | Types of monomers/ Composition ratio [parts by mass] | St/BD/AA = 57/33/10 | St/BD/AA = 57/33/10 | St/BD/AA = 57/33/10 | St/BD/AA = 57/33/10 | St/BD/AA = 57/33/10 | St/BD/AA = 57/33/10 | St/BD/AA = 57/33/10 | St/BD/AA = 57/33/10 |
| | | | Amount [mass%] | 1000 | 1000 | 1000 | 1000 | 1000 | 1000 | 1000 | 1000 |
| Evaluation | | | Paste dispersibility | A | C | A | B | D | B | C | C |
| | | | Slurry viscosity stability | B | B | B | C | Cannot be produced | B | D | D |
| | | | Water content in electrode | D | D | C | B | - | B | B | B |
| | | | Cvcle characteristics | B | B | B | C | - | C | C | B |
| | | | Rate of resistance increase in high-temperature storage test | D | C | D | C | - | C | D | C |

Abbreviations used in the tables are as follows.
AA: Acrylic acid
Aamid: Acrylamide
SSNa: Sodium styrenesulfonate
St: Styrene
BD: Butadiene
CMC: Sodium salt of carboxymethyl cellulose

It can be seen from Table 1 that by using the conductive material pastes of Examples 1 to 9, paste dispersibility was maintained and the provision of a slurry composition for a non-aqueous electrolyte solution secondary battery negative electrode in which slurry viscosity stability is maintained was enabled while also providing a non-aqueous electrolyte solution secondary battery having a suppressed rate of resistance increase in a high-temperature storage test.

### INDUSTRIAL APPLICABILITY

According to the present disclosure, it is possible to provide a conductive material paste for a non-aqueous electrolyte solution secondary battery that maintains paste dispersibility and that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Moreover, according to the present disclosure, it is possible to provide a slurry composition for a non-aqueous electrolyte solution secondary battery negative electrode that enables the provision of a slurry composition for a non-aqueous electrolyte solution secondary battery negative electrode in which slurry viscosity stability is maintained while also being capable of providing a non-aqueous electrolyte solution secondary battery having a suppressed rate of resistance increase in a high-temperature storage test.

Furthermore, according to the present disclosure, it is possible to provide a negative electrode for a non-aqueous electrolyte solution secondary battery that is capable of providing a non-aqueous electrolyte solution secondary battery having a suppressed rate of resistance increase in a high-temperature storage test.

Also, according to the present disclosure, it is possible to provide a non-aqueous electrolyte solution secondary battery having a suppressed rate of resistance increase in a high-temperature storage test.

## Claims

1. A conductive material paste for a non-aqueous electrolyte solution secondary battery comprising carbon nanotubes (A), a dispersant (B), a dispersant (C), and water, wherein
the dispersant (B) is a copolymer comprising at least an unsaturated carboxylic acid monomer unit and a (meth)acrylamide group-containing monomer unit, and
the dispersant (C) is a thiazoline or derivative thereof.

2. The conductive material paste for a non-aqueous electrolyte solution secondary battery according to claim 1, wherein the copolymer constituting the dispersant (B) further comprises an aromatic sulfonic acid monomer unit.

3. The conductive material paste for a non-aqueous electrolyte solution secondary battery according to claim 1 or 2, wherein content of the unsaturated carboxylic acid monomer unit is not less than 5 parts by mass and not more than 80 parts by mass when all monomer units are taken to be 100 parts by mass in the copolymer constituting the dispersant (B).

4. The conductive material paste for a non-aqueous electrolyte solution secondary battery according to any one of claims 1 to 3, wherein content of the (meth)acrylamide group-containing monomer unit is not less than 25 parts by mass and not more than 400 parts by mass when content of the unsaturated carboxylic acid monomer unit is taken to be 100 parts by mass in the copolymer constituting the dispersant (B).

5. The conductive material paste for a non-aqueous electrolyte solution secondary battery according to any one of claims 1 to 4, wherein at least a portion of the unsaturated carboxylic acid monomer unit comprised in the copolymer constituting the dispersant (B) is in a form of a neutralized salt that is an alkali metal salt or an ammonium salt.

6. The conductive material paste for a non-aqueous electrolyte solution secondary battery according to any one of claims 1 to 5, wherein the thiazoline or derivative thereof constituting the dispersant (C) is an isothiazoline or derivative thereof.

7. The conductive material paste for a non-aqueous electrolyte solution secondary battery according to any one of claims 1 to 6, further comprising carbon black.

8. The conductive material paste for a non-aqueous electrolyte solution secondary battery according to any one of claims 1 to 7, further comprising a particulate polymer, wherein the particulate polymer comprises at least an unsaturated carboxylic acid monomer unit, an aromatic vinyl monomer unit, and a diene monomer unit as polymer constitutional units.

9. The conductive material paste for a non-aqueous electrolyte solution secondary battery according to any one of claims 1 to 8, having a pH of not lower than 6 and not higher than 9.

10. A slurry composition for a non-aqueous electrolyte solution secondary battery negative electrode comprising: the conductive material paste for a non-aqueous electrolyte solution secondary battery according to any one of claims 1 to 9; and at least a silicon-based active material.

11. A negative electrode for a non-aqueous electrolyte solution secondary battery comprising a negative electrode mixed material layer formed using the slurry composition according to claim 10.

12. A non-aqueous electrolyte solution secondary battery comprising the negative electrode according to claim 11.
